Europäisches Patentamt

European Patent Office

Office européen des brevets

(19)

(11) Numéro de publication: **0 337 829**
**A1**

(12) ## DEMANDE DE BREVET EUROPEEN

(21) Numéro de dépôt: **89400748.3**

(22) Date de dépôt: **17.03.89**

(51) Int. Cl.4: **G 01 J 4/04**

(30) Priorité: **30.03.88 FR 8804177**

(43) Date de publication de la demande:
**18.10.89 Bulletin 89/42**

(84) Etats contractants désignés:
**AT BE CH DE ES FR GB GR IT LI LU NL SE**

(71) Demandeur: **SCHLUMBERGER INDUSTRIES**
**50, avenue Jean Jaurès**
**F-92120 Montrouge (FR)**

(72) Inventeur: **Meyrueix, Paul**
**125, rue Raymond Losserand**
**F-75014 Paris (FR)**

**Meilland, Philip**
**Le Villard Herbeys**
**F-38320 Eybens (FR)**

(74) Mandataire: **Monod, Jean-Yves**
**SCHLUMBERGER INDUSTRIES CENTRE DE**
**RECHERCHE/SMR B.P. 620-05**
**F-92542 Montrouge Cédèx (FR)**

(54) **Dispositif et procédé polarimetriques à resolution ameliorée.**

(57) L'invention vise l'augmentation de résolution d'un montage polarimétrique et consiste essentiellement en l'insertion dans ce montage d'un composant polarisant (8) produisant une extinction partielle de la composante lumineuse du faisceau à analyser qui présente la plus grande intensité.

L'invention est utilisable dans tout montage destiné à la mesure ou à la détection d'un paramètre physique révélé par un état de polarisation difficile à détecter.

FIG.3

EP 0 337 829 A1

# Description

## DISPOSITIF ET PROCEDE POLARIMETRIQUES A RESOLUTION AMELIOREE

La présente invention concerne notamment un dispositif propre à détecter ou à mesurer un état de polarisation d'un faisceau lumineux, cet état se manifestant par une intensité lumineuse plus grande selon un premier axe de direction prédéterminée et perpendiculaire à la direction de propagation de ce faisceau que selon un second axe perpendiculaire au premier axe et à cette direction.

Cette définition couvre en particulier les montages polarimétriques destinés à détecter ou à mesurer de faibles angles de rotation du plan de polarisation d'un faisceau lumineux polarisé ayant subi l'action d'un corps actif qu'il a au moins partiellement traversé.

Ces montages eux-mêmes sont bien connus dans l'art antérieur, et leurs applications sont si nombreuses qu'il ne serait pas possible d'en faire une liste exhaustive.

A titre d'exemple, une de leurs applications industrielles les plus répandues consiste à relire une information enregistrée, sous la forme d'un état magnétique, sur un support de données, un disque par exemple; cette relecture est effectuée en dirigeant un faisceau lumineux, généralement polarisé linéairement, sur un transducteur magnéto-optique influencé par l'état magnétique à relire, ce faisceau incident étant modifié et réfléchi par ce transducteur; la mesure ou l'identification de l'état magnétique correspondant à l'information enregistrée est obtenue par observation de l'angle de rotation de polarisation, c'est-à-dire l'angle que forme l'axe de polarisation du faisceau réfléchi avec celui du faisceau incident.

Un problème fréquemment rencontré dans les différentes applications des montages polarimétriques réside dans la difficulté de détecter ou de mesurer de faibles angles de rotation de polarisation ou de très faibles ellipticités.

Traditionnellement, la mesure d'un angle de rotation de polarisation comprend la mesure de l'intensité lumineuse que le faisceau issu du transducteur véhicule selon un troisième axe, éventuellement différent du premier, et la mesure de l'intensité lumineuse qu'il véhicule selon un quatrième axe, éventuellement différent du second axe mais perpendiculaire au troisième, ces mesures étant le plus souvent effectuées en parallèle, bien que de façon non necessaire, grâce à deux détecteurs photo-électriques dont chacun est dédié à la mesure de l'intensité suivant un seul de ces deux axes.

Dans le cas d'un angle très faible de rotation de polarisation, la mesure de cet angle est délicate quel que soit le choix des axes.

En effet, si les troisième et quatrième axes se confondent respectivement avec les premier et second axes, l'intensité lumineuse recueillie sur un détecteur est très importante, et le plus souvent au voisinage du seuil d'intensité pour lequel ce détecteur atteint un état de saturation, alors que l'intensité recueillie par l'autre détecteur est éventuellement si faible qu'il est difficile d'extraire, du bruit de fond de cet autre détecteur, le signal utile attribuable à l'existence de cette intensité.

Si les troisième et quatrième axes sont respectivement à 45 degrés avec les premier et second axes, les intensités lumineuses recueillies sur l'un et l'autre des détecteurs sont à la fois importantes et très proches l'une de l'autre, de sorte que le rapport de leur différence à leur somme, qui est représentatif du sinus du double de l'angle de rotation recherché, est entaché d'une incertitude très grande.

Dans ce contexte, le but de la présente invention est de proposer un dispositif et un procédé de mesure polarimétrique présentant une résolution accrue, et utilisables quelqu'en soit l'application.

Dans ce but, le dispositif de l'invention, qui est propre à détecter ou à mesurer un état de polarisation d'un faisceau lumineux, cet état se manifestant par une intensité lumineuse plus grande selon un premier axe de direction prédéterminée et perpendiculaire à la direction de propagation de ce faisceau que selon un second axe perpendiculaire au premier axe et à cette direction, est essentiellement caractérisé en ce qu'il comprend un composant polarisant placé sur le trajet du faisceau de manière à en réduire l'intensité lumineuse selon ledit premier axe sans réduire dans une proportion aussi élevée l'intensité lumineuse véhiculée par ce faisceau selon ledit second axe.

De préférence, le composant polarisant est un polariseur à effet partiel comprenant par exemple un revêtement multicouche, et constituant avantageusement un miroir polarisant.

Si l'état de polarisation du faisceau est représenté par un angle de rotation de polarisation très faible, ou par une polarisation de très faible ellipticité, le composant polarisant est orienté de manière que la réduction d'intensité lumineuse que subit ce faisceau selon ledit premier axe soit dans un rapport au moins égal à dix avec la réduction d'intensité lumineuse qu'il subit éventuellement selon ledit second axe.

L'invention concerne aussi un procédé de détection et/ou de mesure d'un paramètre physique révélé par une modification d'une propriété optique, telle par exemple que l'activité optique, la biréfringence linéaire ou le dichroïsme, d'un transducteur soumis à l'influence de ce paramètre physique, comprenant: une opération consistant à exciter le transducteur par un faisceau lumineux excitateur à partir duquel ce transducteur produit un faisceau modifié, ce transducteur étant orienté et/ou excité de façon que le faisceau lumineux modifié présente un état de polarisation se manifestant par une intensité lumineuse plus grande selon un premier axe de direction prédéterminée et perpendiculaire à la direction de propagation de ce faisceau que selon un second axe perpendiculaire au premier axe et à cette direction; et une opération consistant à détecter et/ou mesurer l'intensité lumineuse du faisceau modifié selon l'un au moins de deux axes différents l'un de l'autre, ce procédé étant essentiellement caractérisé en ce qu'il comprend en outre une opération intermédiaire consistant à éteindre au moins partiellement l'intensité que véhicule, selon le premier axe, le faisceau modifié, avant sa détection ou sa mesure, sans éteindre dans une proportion aussi élevée l'intensité que ce faisceau véhicule selon ledit second axe.

De préférence, l'opération intermédiaire consistant à éteindre au moins partiellement l'intensité que présente le faisceau modifié selon le premier axe consiste essentiellement en une réflexion du faisceau modifié sur un miroir polarisant; cette technique est le plus avantageusement utilisée lorsque le faisceau excitateur, après avoir traversé le miroir polarisant, est modifié par une réflexion dans le transducteur puis réfléchi sur le miroir polarisant, ce dernier ne produisant aucune extinction sensible du faisceau excitateur, mais assurant en revanche, outre la réduction d'intensité lumineuse souhaitée du faisceau modifié, la séparation entre le faisceau excitateur et ce faisceau modifié, à la sortie du transducteur.

Le procédé est notamment utilisable lorsque le transducteur comprend un corps présentant un effet électro-optique ou effet magnéto-optique, ce qui lui ouvre de nombreuses applications.

D'autres caractéristiques et avantages de l'invention ressortiront clairement de la description qui en est faite ci-après, à titre indicatif et nullement limitatif, en référence aux dessins annexés, parmi lesquels:

   - la figure 1 est un schéma d'un montage optique utilisant l'enseignement de l'invention;
   - la figure 2 est un détail en perspective du montage de la figure 1;
   - la figure 3 est un schéma d'un autre montage optique utilisant l'enseignement de l'invention; et
   - la figure 4 représente des courbes caractéristiques de transmission de miroirs polarisants utilisables pour la mise en oeuvre de l'invention.

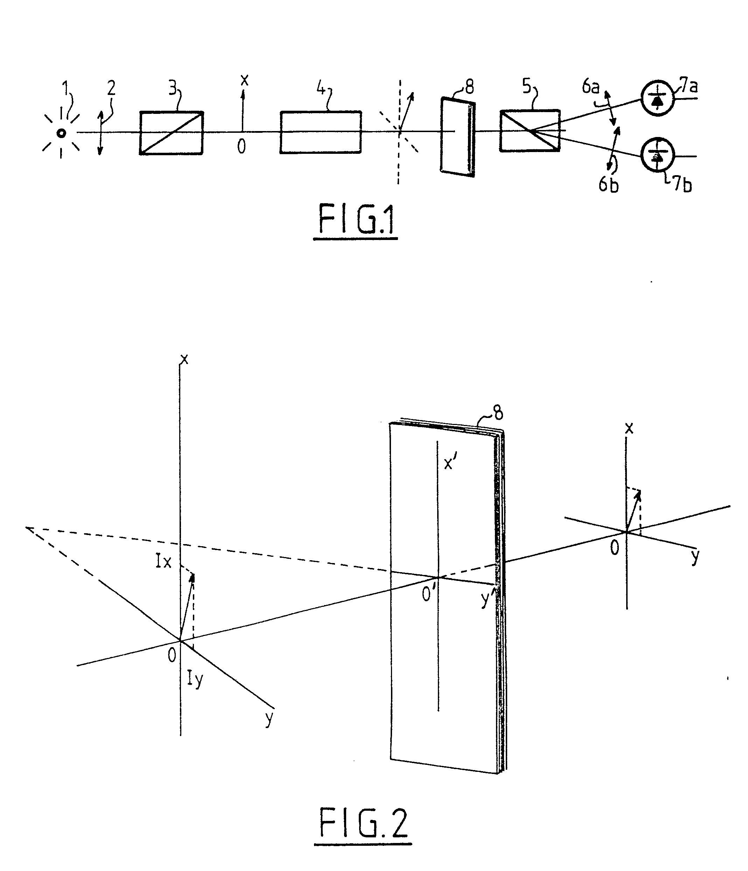

Le montage polarimétrique représenté sur la figure 1 est classique, à l'exception de l'utilisation d'un composant polarisant dont la fonction sera précisée en référence à la figure 2.

Ce montage comprend : une source lumineuse 1, par exemple constituée par une diode laser; une lentille convergente 2 destinée à collimater une partie du flux lumineux de la source 1; un polariseur 3 recevant le faisceau lumineux en provenance de la lentille 2 et produisant un faisceau de lumière polarisée linéairement, par exemple suivant un axe vertical Ox perpendiculaire à la direction de propagation du faisceau; un transducteur 4 susceptible de modifier faiblement la polarisation du faisceau incident, par exemple en produisant une rotation de son plan de polarisation, dont la mesure correspond à un angle faible, le plus souvent inférieur à un degré; un analyseur de Wollaston 5 recevant le faisceau modifié par le transducteur 4 et produisant deux faisceaux séparés qui sont dirigés, à travers deux lentilles respectives 6a et 6b, vers deux photo-détecteurs 7a et 7b.

Ces derniers, par exemple constitués de photodiodes ou de photomultiplicateurs, détectent respectivement les intensités lumineuses que véhicule le faisceau issu du transducteur 4 suivant deux axes différents de préférence perpendiculaires l'un à l'autre, et produisent sur leurs sorties des signaux électriques respectifs, représentatifs de ces intensités.

Par exemple, ces deux détecteurs peuvent détecter respectivement les intensités lumineuses que véhicule le faisceau issu du transducteur 4 suivant l'axe Ox et suivant l'axe Oy perpendiculaire à la fois à l'axe Ox et à la direction de propagation du faisceau. De façon plus classique cependant, les axes de l'analyseur de Wollaston sont disposés à 45 degrés des axes du polariseur 3, de sorte que les deux détecteurs 7a et 7b détectent les intensités lumineuses que véhicule le faisceau issu du transducteur 4 suivant deux axes respectifs à 45 degrés des axes Ox et Oy.

Ces montages dits polarimétriques, bien connus de l'homme de l'art, sont très souvent utilisés pour la détection ou la mesure d'un paramètre physique, par exemple une tension, un courant, ou un champ magnétique, agissant sur un transducteur tel que 4; par exemple, ce dernier est constitué d'un matériau doté de propriétés électro-optiques ou magnéto-optiques, et le paramètre physique recherché module l'effet de ce transducteur sur le faisceau qui le traverse, de sorte que celui-ci subit une déformation elliptique ou une rotation de son plan de polarisation, qui sont représentatives de ce paramètre.

Dans ces montages classiques, la présente invention propose le perfectionnement consistant en l'insertion d'un composant polarisant 8 à la sortie du transducteur 4 jouant le rôle de polariseur à effet partiel.

L'intérêt et l'effet de ce polariseur à effet partiel seront mieux compris en référence à la figure 2, pour l'interprétation de laquelle le transducteur sera supposé agir comme un simple rotateur, dont l'effet est de tourner le plan de polarisation du faisceau.

Si l'angle de rotation introduit par le transducteur 4 est faible, par exemple inférieur à un degré, l'intensité lumineuse véhiculée suivant l'axe Ox par le faisceau lumineux modifié, c'est-à-dire du faisceau issu du transducteur 4, est plusieurs dizaines ou plusieurs centaines de fois plus grande que l'intensité véhiculée par ce même faisceau suivant l'axe Oy.

Cette situation est symbolisée sur la gauche de la figure 2 par un vecteur, représentant le champ électrique polarisé du faisceau lumineux modifié, et dont la composante suivant l'axe Ox est sensiblement plus grande que la composante suivant l'axe Oy.

Les axes O'x' et O'y' apparaissant sur le polariseur à effet partiel 8 représentent les projections respectives des axes Ox et Oy sur ce dernier, suivant la direction de propagation Oz du faisceau modifié par le transducteur 4.

Dans l'exemple de la figure 2, le polariseur à effet partiel 8 est supposé être constitué par un composant à revêtement multicouche, propre à agir sur la polarisation du faisceau qui le traverse d'une manière qui dépend de son orientation par rapport à ce faisceau, l'extinction d'une composante de ce dernier diminuant lorsque l'angle qu'elle fait avec ce composant augmente.

Ce polariseur 8 est disposé de façon que l'angle entre les axes Ox et O'x' soit plus faible que l'angle entre les axes Oy et O'y', de sorte que l'intensité véhiculée suivant l'axe Ox par le faisceau modifié, qui est prédominante, subisse de la part du polariseur à effet partiel 8 une extinction plus forte que celle que subit, le cas échéant, l'intensité véhiculée par ce faisceau suivant l'axe Oy.

De préférence même, l'angle entre les axes Ox et O'x' est nul, tandis que l'angle entre les axes Oy et O'y' est proche de l'angle nominal du revêtement multicouche constituant le polariseur à effet partiel 8, c'est-à-dire de l'angle pour lequel la composante lumineuse du faisceau modifié, dirigée suivant l'axe Ox, subit une réflexion totale sur la surface de ce polariseur et, par suite, n'est pas transmise.

L'extinction partielle que subit le faisceau modifié est symbolisée sur la figure 2 par la réduction importante que subit la composante suivant l'axe Ox du faisceau traversant le polariseur à effet partiel 8.

Alors qu'il est fréquent, dans les montages optiques, de chercher à améliorer les couplages optiques et, de façon générale, à disposer d'un flux lumineux maximal, l'intérêt de cette extinction rend l'invention paradoxale pour l'homme de l'art.

Dans le cas où la détection, ou la mesure, du taux de polarisation du faisceau issu du transducteur 4 est effectuée selon les axes Ox et Oy liés au faisceau, l'intérêt de cette extinction peut être mis en évidence par les explications suivantes: l'intensité $I_x$ véhiculée par le faisceau suivant l'axe Ox peut, quelle que soit son amplitude initiale, être réduite de façon telle que sa détection après extinction ne pose plus aucun problème de saturation pour le détecteur correspondant; en particulier, il devient donc possible, sans se heurter au problème d'une saturation de ce détecteur, d'augmenter considérablement l'intensité du faisceau incident; or, comme le signal de sortie utile de l'autre détecteur, chargé de la mesure de l'intensité $I_y$ suivant l'axe Oy, augmente, pour une même valeur de l'angle de polarisation de rotation, proportionnellement à l'intensité du faisceau incident, il devient donc possible d'augmenter ce signal jusqu'à ce qu'il atteigne des valeurs pour lesquelles il est aisé de le distinguer du bruit.

Dans le cas où la détection, ou la mesure, du taux de polarisation du faisceau issu du transducteur 4 est effectuée selon des axes disposés à 45 degrés par rapport aux axes Ox et Oy liés au faisceau, l'intérêt de cette extinction peut être mis en évidence par les explications suivantes: en l'absence du polariseur à effet partiel 8, les intensités respectives Ia et Ib reçues par les deux détecteurs 7a et 7b sont de la forme:

$$Ia = k.I_o.(1 + \sin(2.phi)) \qquad (1)$$
$$Ib = k.I_o.(1 - \sin(2.phi)) \qquad (2)$$

expressions dans lesquelles k est une constante liée aux caractéristiques de transmission du montage, où $I_o$ est l'intensité de la source 1, et où phi désigne l'angle de rotation de polarisation introduit par le transducteur; en revanche, en présence d'un polariseur à effet partiel 8, les intensités respectives I'a et I'b reçues par les deux détecteurs 7a et 7b sont de la forme:

$$I'a = k.I_o.(1 + A.\sin(2.phi))/A^2 \qquad (3)$$
$$I'b = k.I_o.(1 - A.\sin(2.phi))/A^2 \qquad (4)$$

expressions dans lesquelles A est une constante relativement élevée, par exemple supérieure à cinq, représentative de l'extinction introduite par le polariseur à effet partiel 8; si, toujours en utilisant un polariseur à effet partiel 8, l'intensité de la source est portée à une valeur de $A^2.I_o$, les intensités respectives I"a et I"b reçues par les deux détecteurs 7a et 7b deviennent:

$$I''a = k.I_o.(1 + A.\sin(2.phi)) \qquad (5)$$
$$I''b = k.I_o.(1 - A.\sin(2.phi)) \qquad (6)$$

La comparaison des relations 1 et 5 d'une part, et 2 et 6 d'autre part montre que l'insertion du polariseur à effet partiel 8 dans le montage a pour résultat que la quantité (Ia-Ib)/(Ia+Ib), représentative de sin(2.phi), s'est trouvée, par son remplacement par la quantité (I"a-I"b)/(I"a+I"b), multipliée par un facteur d'amplification A dépendant, par une loi connue ou susceptible de l'être, de l'angle d'incidence du faisceau sur le polariseur à effet partiel 8, ce facteur pouvant donc être choisi pour une parfaite adaptation aux conditions particulières de chaque mesure.

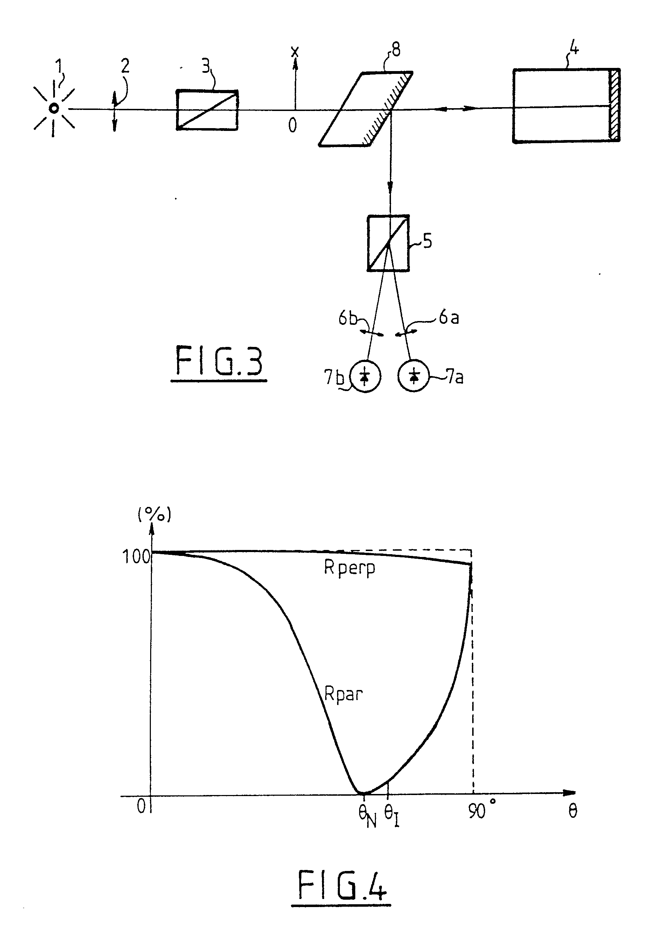

La figure 3 représente un autre montage polarimétrique classique se distinguant par le fait qu'il utilise, conformément à l'enseignement de la présente invention, un polariseur à effet partiel 8.

Les éléments qui sont représentés sur cette figure et qui sont fonctionnellement équivalents à ceux représentés sur la figure 1 portent les mêmes chiffres de référence que ces derniers.

Les deux seules différences entre les figures 1 et 3 résident dans le fait que le transducteur 4 d'une part et le polariseur à effet partiel 8 d'autre part sont du type à transmission de lumière sur la figure 1 et du type à réflexion sur la figure 3.

Dans les deux cas, le composant polarisant 8 comprend de préférence un revêtement multicouche de manière à présenter une grande efficacité; dans le cas de la figure 3, ce revêtement constitue un miroir polarisant, agissant sur le faisceau réfléchi en provenance du transducteur 4.

Par rapport au montage de la figure 1, le montage de la figure 3 présente l'intérêt que le polariseur à effet partiel 8 joue le rôle de séparateur entre le faisceau qui se dirige vers le transducteur 4 et celui qui en est issu, de sorte que l'emploi d'une lame semi-transparente, qui serait autrement rendu nécessaire par l'utilisation d'un transducteur du type à réflexion, devient superflu. En outre, alors qu'il transmet parfaitement la composante d'axe Ox du faisceau issu du polariseur 3, se dirigeant vers le transducteur 4, le miroir polarisant 8 atténue fortement la composante de même direction du faisceau réfléchi par le transducteur, et remplit donc la fonction d'atténuateur conformément à l'enseignement de la présente invention.

La figure 4 représente les courbes caractéristiques connues des coefficients de réflexion d'un miroir polarisant, tel que ceux qui sont disponibles dans le commerce et utilisables pour la mise en oeuvre de l'invention, en fonction de l'angle thêta d'incidence de ce faisceau sur ce miroir.

Par "coefficient de réflexion", on entend le rapport de l'intensité du faisceau réfléchi à celle du faisceau incident.

Le plan d'incidence étant défini comme le plan normal à la surface du miroir et contenant le faisceau (plan de la feuille de papier pour la figure 3), la courbe inférieure de la figure 4 représente le coefficient de réflexion $R_{par}$ du miroir pour la composante lumineuse du faisceau dirigée suivant le plan d'incidence.

La courbe supérieure représente le coefficient de réflexion $R_{perp}$ du miroir pour la composante lumineuse du faisceau dirigée perpendiculairement au plan d'incidence.

Comme le montre la figure 4, la courbe $R_{par}$ s'annule pour une valeur thêta$_N$ de l'angle d'incidence, généralement bien que non nécessairement de l'ordre de 50 à 60 degrés, tandis que la courbe $R_{perp}$ reste au voisinage de la valeur maximale de 100%.

La valeur thêta$_N$ est la valeur de l'angle dit "angle nominal", connu sous le nom d'"angle de Brewster" lorsque le miroir est un simple dioptre.

Pour un angle d'incidence thêta$_i$ se situant au voisinage de l'angle thêta$_N$, la composante du faisceau réfléchi qui est polarisée dans le plan d'incidence subit une extinction sensiblement plus élevée que celle que subit la composante du faisceau qui est perpendiculaire à ce plan, de sorte que les avantages inhérents à l'invention peuvent être observés.

Comme l'homme de l'art le reconnaîtra aisément, la présente invention est utilisable quelle que soit l'application qui est faite de la mesure de l'angle de rotation de polarisation, ainsi que dans le cas où le transducteur, au lieu de présenter une biréfringence circulaire conduisant à une pure rotation du plan de polarisation du faisceau incident comme précédemment décrit, présente une biréfringence linéaire conduisant à une déformation elliptique de la polarisation du faisceau, ou un dichroïsme.

## Revendications

1. Dispositif propre à détecter ou à mesurer un état de polarisation d'un faisceau lumineux, cet état se manifestant par une intensité lumineuse plus grande selon un premier axe de direction prédéterminée et perpendiculaire à la direction de propagation de ce faisceau que selon un second axe perpendiculaire au premier axe et à cette direction, caractérisé en ce qu'il comprend un composant polarisant placé sur le trajet du faisceau de manière à en réduire l'intensité lumineuse selon ledit premier axe sans réduire dans une proportion aussi élevée l'intensité lumineuse véhiculée par ce faisceau selon ledit second axe.

2. Dispositif suivant la revendication 1, caractérisé en ce que ledit composant polarisant est un polariseur à effet partiel.

3. Dispositif suivant la revendication 2, caractérisé en ce que ledit composant polarisant comprend un revêtement muticouche.

4. Dispositif suivant la revendication 2 ou 3, caractérisé en ce que ledit composant polarisant comprend un miroir polarisant.

5. Dispositif suivant l'une quelconque des revendications précédentes, caractérisé en ce que ledit composant polarisant est orienté de manière que la réduction d'intensité lumineuse que subit ledit faisceau selon ledit premier axe soit dans un rapport au moins égal à dix avec la réduction d'intensité lumineuse qu'il subit éventuellement selon ledit second axe.

6. Procédé de détection et/ou de mesure d'un paramètre physique révélé par une modification d'une propriété optique d'un transducteur soumis à l'influence de ce paramètre physique, comprenant: une opération consistant à exciter le transducteur par un faisceau lumineux excitateur à partir duquel ce transducteur produit un faisceau modifié, ce transducteur étant orienté et/ou excité de façon que le faisceau lumineux modifié présente un état de polarisation se manifestant par une intensité lumineuse plus grande selon un premier axe de direction prédéterminée et perpendiculaire à la direction de propagation de ce faisceau que selon un second axe perpendiculaire au premier axe et à cette direction; et une opération consistant à détecter et/ou mesurer l'intensité lumineuse du faisceau modifié selon l'un au moins de deux axes différents l'un de l'autre, caractérisé en ce qu'il comprend en outre une opération intermédiaire consistant à éteindre au moins partiellement l'intensité que véhicule, selon le premier axe, le faisceau modifié, avant sa détection ou sa mesure, sans éteindre dans une proportion aussi élevée l'intensité que ce faisceau véhicule selon ledit second axe.

7. Procédé suivant la revendication 6, caractérisé en ce que ladite opération intermédiaire consistant à éteindre au moins partiellement l'intensité que véhicule le faisceau modifié selon le premier axe consiste essentiellement en une réflexion du faisceau modifié sur un miroir polarisant.

8. Procédé suivant la revendication 6 ou 7, caractérisé en ce que le transducteur est du type dans lequel le faisceau lumineux modifié provient d'une réflexion du faisceau excitateur.

9. Procédé suivant l'une quelconque des revendications 6 à 8, caractérisé en ce que le transducteur comprend un corps présentant un effet électro-optique.

10. Procédé suivant l'une quelconque des revendications 6 à 8, caractérisé en ce que le transducteur comprend un corps présentant un effet magnéto-optique.

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 854 064  (HITACHI LTD.) <br> * page 10, lignes 22-35; page 15, lignes 12-18; figures 4,5 * <br> --- | 1 | G 01 J    4/04 |
| A | DE-A-3 708 148  (M. LINDER) <br> * revendications 1,2,9; figure * <br> --- | 1 | |
| A | EP-A-0 075 689  (IBM) <br> * revendication 1 * <br> --- | 1 | |
| A | US-A-4 015 127  (A.J. SHARKINS) <br> * figure 4; colonne 8, ligne 56 - colonne 9, ligne 30 * <br> ----- | 1 | |

DOMAINES TECHNIQUES
RECHERCHES (Int. Cl.4)

G 01 J    4/04
G 01 N   21/21

**Le présent rapport a été établi pour toutes les revendications**

| Lieu de la recherche | Date d'achèvement de la recherche | Examinateur |
|---|---|---|
| BERLIN | 28-04-1989 | FUCHS R |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)